# EUROPEAN PATENT APPLICATION

(11) **EP 0 992 777 A1**
(43) Date of publication of application: **12.04.2000**
(21) Application number: 99119716.1
(22) Date of filing: 05.10.1999
(51) Int. Cl.: G01L 1/12

(54) **Magnetostriction detecting type sensor**

(30) Priority: 09.10.1998 JP 28821998
(71) Applicant: SANYO ELECTRIC Co., Ltd., Moriguchi-shi, Osaka (JP)
(72) Inventor: Aoki, Hideaki, Kyoto (JP)
(74) Representative: Glawe, Delfs, Moll & Partner

(57) **Abstract**

A magnetostriction detecting type sensor includes a magnetic substrate. The magnetic substrate is bonded with a flat-formed magnetostrictive element through an adhesive A magnetostriction detecting coil is arranged in a spiral form through interconnect printing on a surface of substrate in a manner surrounding magnetostrictive element. Furthermore, the magnetostriction detecting coil has opposite end extension lines respectively connected to terminals provided on the substrate.

## Description

### BACKGROUND OF THE INVENTION

### Field of the invention

This invention relates to magnetostriction detecting type force sensors and, more particularly, to a magnetostriction detecting type force sensor for detecting an external stress through use of a magnetostrictive element.

### Description of the prior art

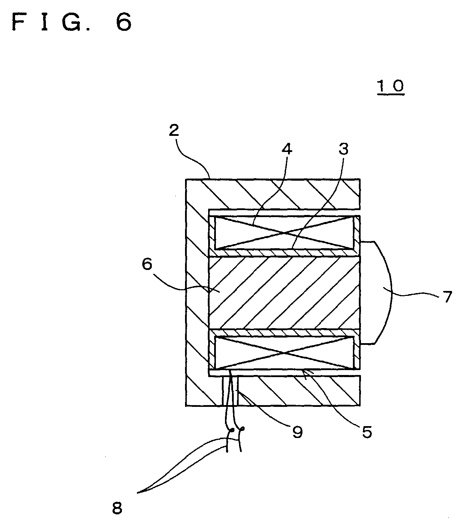

The conventional magnetostriction detecting type force sensor 1 includes, as shown in Figure 6, a support case 2 formed in a bottomed cylinder to serve as also a mount substrate. The support case 2 accommodates therein a cylindrical magnetostriction detecting coil 5 formed by a coil 4 wound, in a solenoid form, around a cylindrical coil bobbin 3 flanged at respective ends, and a columnar magnetostrictive element 6 coaxially received in the detecting coil 5. Further, a cap member 7 having a spherical end face is mounted on a tip surface of the magnetostrictive element 6.

The magnetostriction detecting coil 5 has, at respective ends, lead wires 8 and 8 extending to an outside via a through-hole 9 opened through a side wall of the support case 2.

The conventional magnetostriction detecting type force sensor 1 is structured that the magnetostrictive element itself is wound, through the coil bobbin, by the magnetostriction detecting coil in a solenoid fashion as mentioned above. However, this structure requires an accommodation support case in order to accommodate the magnetostrictive element. Meanwhile, there is another problem that the support case require separate arrangement including to open a through-hole through the support case to deal with the opposite ends of the magnetostriction detecting coil.

Furthermore, the magnetostriction detecting coil is wound over the cylindrical coil bobbin. Consequently, the resulting sensor becomes high in size thus making it difficult to be used in a narrow space.

### SUMMARY OF THE INVENTION

It is therefore a primary object of the present invention to provide a magnetostriction detecting type force sensor which is simple in structure but easy to handle without the provision of an accommodation support case for a magnetostrictive element.

A magnetostriction detecting type sensor according to the present invention, comprises: a magnetic substrate having a high strength; a magnetostrictive element fixed on the substrate; a magnetostriction detecting coil in a flat form placed on the substrate in a manner surrounding the magnetostrictive element; and terminals respectively connected to end extension lines of the magnetostriction detecting coil.

The magnetostriction detecting coil is arranged in a planar form on the magnetic substrate in a manner surrounding the magnetostrictive element fixed on the substrate, wherein the terminals are respectively connected with the opposite end extension lines of the detecting coil. Accordingly, there is no necessity of providing a holding case for accommodating the detecting coil. Also, thickness reduction is possible.

According to the invention, the simple structure and reduced thickness enables sensor arrangement even in a narrow space, improving usability. Furthermore, it is possible to easily deal with the opposite end extension lines of the magnetostriction detecting coil.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a perspective view showing one embodiment of the present invention;

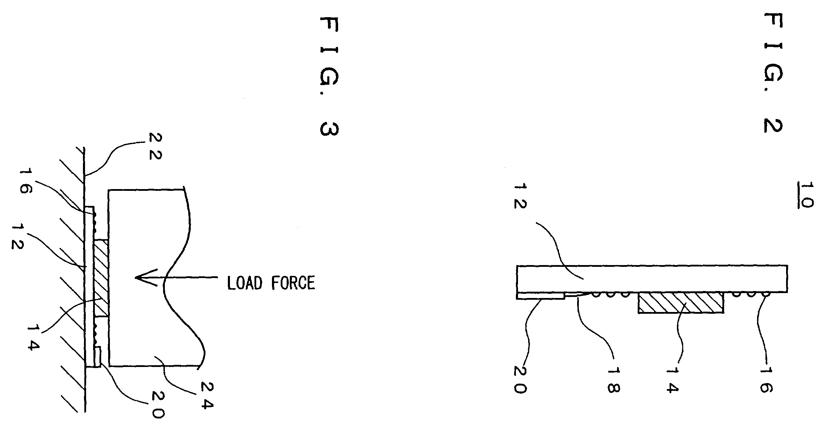

Figure 2 is an illustrative view of Figure 1 as viewed from a side;
Figure 3 is an illustrative view showing a state of use of the one embodiment of the invention;
Figure 4 is an illustrative view showing another embodiment of the invention;
Figure 5 is an illustrative view showing a modification to the Figure 4 embodiment; and
Figure 6 is an essential part sectional illustrative view showing a conventional art.

### DETAILED DESCRIPTION OF THE PREFERRED EMBODIMENTS

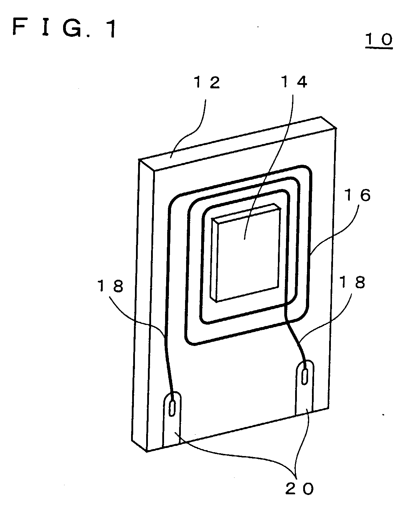

A magnetostriction detecting type force sensor 10 according to one embodiment of the present invention, shown in Fig. 1, includes a magnetic substrate 12 formed rectangular in form and high in strength, a magnetostrictive element 14 formed flat and bonded to the substrate 12 through an adhesive or the like to have a magnetic permeability to be varied depending upon a stress acting thereon, and a magnetostriction detecting coil 16 arranged flat on a surface of the substrate 12 in a manner surrounding the magnetostrictive element 14.

The magnetostrictive element 14 is formed of a magnetostrictive material containing a rare earth metal element and iron, i.e. a material to cause deformation when applied by a magnetic field, or a material possessing a reverse magnetostriction property (Villarieffect) to produce a magnetic field when deformed. Such materials include, for example, an Ni-Fe based magnetostrictive material or RFe based magnetostrictive material. It is particularly preferred to use an RFe based magnetostrictive material, called a super magnetostrictive material, which is extremely great in amount of magnetostriction. In this case, the resulting sensor will have extremely large variation of magnetic resistance, high output voltage and stable temperature characteristics.

Meanwhile, the magnetostriction detecting coil 16 is formed by a usual enamel-coated copper wire with a proper diameter. The copper wire is formed in a spiral form through circuit printing or adhesion on a substrate 12, and has opposite-end extension wires 18 and 18 respectively connected to terminals 20 and 20 fixed on the substrate 12. In this embodiment, the magnetostriction detecting type force sensor 10 can be made flat with reduced thickness. Consequently, if as shown in Figure 3 the magnetostriction detecting type force sensor 10 of the invention is installed in a gap between a particular support base 22 and an object to be measured 24 and a load force of the object to be measured 24 is directly applied to the magnetostrictive element 14 placed on the substrate 12, then the magnetostrictive element 14 is deformed due to the external stress and changed in magnetic permeability. Due to this, the magnetostrictive element 14 is changed in magnetic flux density, the magnetic flux linked to the magnetostriction detecting coil 16 is varied, and the inductance on the detecting coil 16 is varied. From the inductance change, it is possible to detect of the external stress or torque applied to the magnetostrictive element 14.

Accordingly, it is possible to measure a magnitude of a load force, or external stress, applied from the object to be measured 24 to the magnetostrictive element 14 by detecting an inductance change on the magnetostriction detecting coil 16.

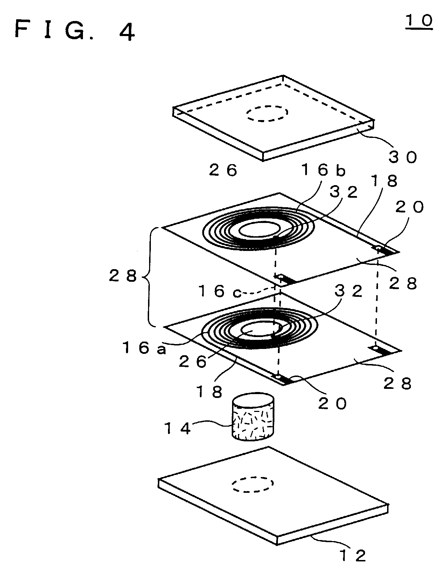

Fig. 4 shows a magnetostriction detecting type force sensor 10 according to another embodiment of the invention. This includes a magnetic substrate 12 formed in a square form, a magnetic element 14 formed in a flat cylinder and bonded on the substrate 12 through an adhesive, a coil substrate 28 formed generally centrally with an insertion hole to be coaxially inserted by the magnetostrictive element 14, and having, on opposite surfaces, spiral coils 16a and 16b constituting a magnetostriction detection coil 16 in a manner surrounding the insertion hole 26, and another magnetic substrate 30 cooperating with the magnetic substrate 12 to sandwich and fix the magnetostrictive element 14 and coil substrate 28 by using an adhesive or the like.

Meanwhile, the coil substrate 28 has, at end positions on opposite surfaces, terminals 20 and 20 connected respectively to the end extension lines 18 and 18 of the magnetostriction detection coil 16. The coil substrate 28 also has a small hole 32 passed by a coupling line 16c to couple between the spiral coils 16a and 16b constituting the magnetostriction detection coil 16. This small hole 32 may be a slit opened to the insertion hole 26 inserted by the magnetostrictive element 14. In this case, the coupling line 16c can be easily passed through the slit. Incidentally, the other magnetic substrate 30 may be omitted as required.

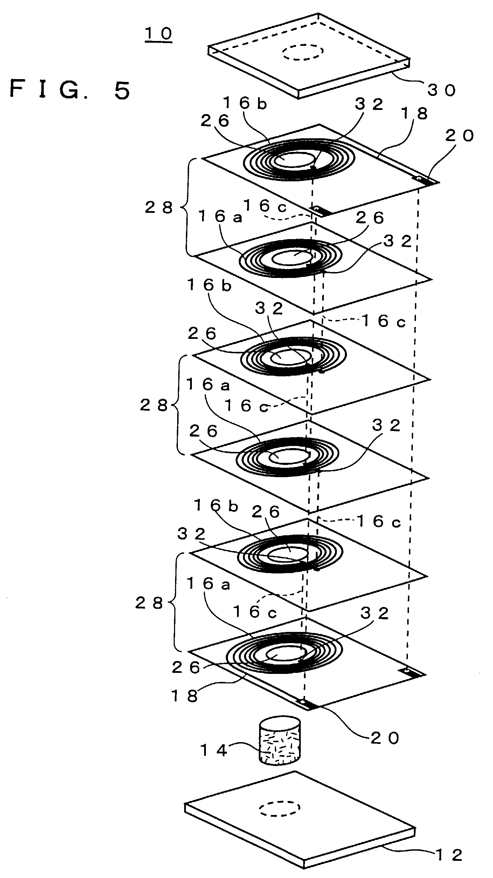

Furthermore, Figure 5 shows a magnetostriction detecting type force sensor 10 as a modification to the Figure 4 embodiment. This magnetostriction detecting type force sensor 10 is same in structure as the Figure 4 embodiment except that the coil substrate 28 of Figure 4 embodiment having on the respective surface the spiral coils 16a and 16b constituting the magnetostriction detecting coil 16 is stacked by three layers, thus forming a multi-layered substrate. Such multi-layered substrate formed by a plurality of coil substrate 28 provides an increased number of coil turns. Thus, more proper inductance level can be matched to.

Incidentally, the magnetostriction detecting sensor 10 of the invention has applications including, for example, the use of a pedal-operated torque sensor for an auxiliary-powered bicycle (assist-electric bicycle) mounted with an electric motor and a power source battery therefor. In such a case, the sensor is arranged in a bicycle pedal section so as to detect pedal force torque by the operator, wherein auxiliary power is applied as required by the electric motor in order to facilitate running on a sloping road or the like. Also, another application includes the use of a weight sensor to detect a weight of washing for a microcomputer-controlled full-automatic washer. In this case, washing time etc. can be automatically set depending upon a detecting weight of washing by the sensor.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A magnetostriction detecting type sensor, comprising:
a magnetic substrate having a high strength;
a magnetostrictive element fixed on said substrate;
a magnetostriction detecting coil in a flat form placed on said substrate in a manner surrounding said magnetostrictive element; and
terminals respectively connected to end extension lines of said magnetostriction detecting coil.

2. A magnetostriction detecting type sensor according to claim 1, wherein said magnetostriction detecting coil includes a coil substrate having spirally-formed coils on respective surface thereof.

3. A magnetostriction detecting type sensor according to claim 2, wherein said coil substrate is stacked by a plurality of number, and each coil substrate having coils connected with each other.

4. A magnetostriction detecting type sensor according to claim 2 or 3, wherein said coil substrate includes at a center portion an insertion hole in which said magnetostrictive element is inserted.

5. A magnetostriction detecting type sensor according to claim 1 or 2, wherein said magnetostriction detecting coil includes a printed interconnection formed in a spriral form.

6. A magnetostriction detecting type sensor according to any of claims 1 to 5, wherein said magnetostrictive element is formed flat.
